# EUROPEAN PATENT APPLICATION

(11) **EP 4 640 549 A1**
(43) Date of publication of application: **29.10.2025**
(21) Application number: 25172308.6
(22) Date of filing: 24.04.2025
(51) Int. Cl.: B63B 43/18, B63B 79/10, B63B 79/40, B63H 21/14, B63H 21/21, B63H 25/04, B63H 25/50

(54) **AUTOMATED WATERCRAFT OPERATING SYSTEM AND METHOD**

(30) Priority: 25.04.2024 JP 2024071401
(71) Applicant: Yamaha Hatsudoki Kabushiki Kaisha, Iwata-shi, Shizuoka 438-8501 (JP)
(72) Inventor: Inoue, Hiroshi, Iwata-shi, Shizuoka, 4388501 (JP); Okamura, Daisuke, Iwata-shi, Shizuoka, 4388501 (JP); Naito, Katsutoshi, Iwata-shi, Shizuoka, 4388501 (JP); Akahane, Kunihiko, Iwata-shi, Shizuoka, 4388501 (JP); Takase, Hiroaki, Iwata-shi, Shizuoka, 4388501 (JP); Yoshida, Kazumichi, Iwata-shi, Shizuoka, 4388501 (JP); Hirota, Tomohiro, Iwata-shi, Shizuoka, 4388501 (JP)
(74) Representative: Grünecker Patent- und Rechtsanwälte PartG mbB

(57) **Abstract**

An automated watercraft operating system (1) includes a watercraft operating controller (4) and an obstacle sensor (16). The watercraft operating controller (4) is disposed in a watercraft (10) and controls a marine propulsion device (15). The obstacle sensor (16) detects an obstacle in the surroundings of the watercraft (10). When determining that shifted states of the marine propulsion device (15) are not switchable from one to another, the watercraft operating controller (4) stops driving the drive unit (22) in accordance with a result of detection by the obstacle sensor (16).

## Description

The present invention relates to an automated watercraft operating system and a method. Background Information

Japan Laid-open Patent Application Publication No. JP S61-163409 A discloses a technology regarding automatically operating a watercraft.

When a marine propulsion device installed in a watercraft is broken down, for instance, it is demanded for an automated watercraft operating system, by which the watercraft is automatically operated in an unmanned manner, to appropriately handle the breakdown of the marine propulsion device in the watercraft.

It is an object of the present disclosure to provide an automated watercraft operating system and a method, by which, when a marine propulsion device installed in a watercraft is broken down, the breakdown of the marine propulsion device can be appropriately handled in the watercraft.

An automated watercraft operating system according to an aspect relates to an automated watercraft operating system for a watercraft that includes a marine propulsion device including a drive unit. The automated watercraft operating system includes a controller and an obstacle detector. The controller is disposed in the watercraft and controls the marine propulsion device. The obstacle detector detects an obstacle in the surroundings of the watercraft. The controller stops driving the drive unit in accordance with a result of detection by the obstacle detector when determining that shifted states of the marine propulsion device are not switchable from one to another.

In the automated watercraft operating system according to the aspect, when the shift mechanism for switching the shifted states of the marine propulsion device from one to another is broken down due to getting stuck, for instance, the drive unit is stopped being driven in accordance with the result of detection by the obstacle detector. Accordingly, when the shift mechanism of the marine propulsion device installed in the watercraft is broken down, the breakdown of the shift mechanism can be appropriately handled in the watercraft.

Preferably, in the automated watercraft operating system according to the aspect, the controller switches the shifted states of the marine propulsion device from a shifted-on state to a neutral state on a regular basis during automatically operating the watercraft.

Preferably, in the automated watercraft operating system according to the aspect, the controller drives the drive unit until the watercraft is moved away from the obstacle when simultaneously determining that the shifted states of the marine propulsion device are not switchable from a shifted-on state to a neutral state and that the obstacle exists based on the result of detection by the obstacle detector.

Preferably, in the automated watercraft operating system according to the aspect, the watercraft further includes an anchor device, the anchor device including an anchor, and the controller drives the anchor device to lower the anchor after stopping driving the drive unit.

The above described preferred embodiments of the above aspect can be combined with each other.

An automated watercraft operating system according to another aspect relates to an automated watercraft operating system for a watercraft that includes a marine propulsion device including an internal combustion engine. The automated watercraft operating system includes a controller, a throttle sensor, and an actuator. The controller is disposed in the watercraft and controls the marine propulsion device. The throttle sensor detects an opening degree of an electronic throttle valve of the internal combustion engine. The actuator regulates the opening degree of the electronic throttle valve of the internal combustion engine in accordance with a control signal transmitted thereto from the controller. The controller limits a velocity of the watercraft when determining that the opening degree of the electronic throttle valve detected by the throttle sensor is greater than the opening degree of the electronic throttle value to be regulated in accordance with the control signal.

In the automated watercraft operating system according to another aspect described above, the controller limits the velocity of the watercraft when the opening degree of the electronic throttle valve is not regulatable to the opening degree to be regulated in accordance with the control signal transmitted to the actuator from the controller. Accordingly, when the actuator is broken down, for instance, the breakdown of the actuator can be appropriately handled in the watercraft.

A method of automatically operating a watercraft that includes a marine propulsion device including a drive unit according to yet another aspect includes detecting an obstacle in surroundings of the watercraft and stopping driving the drive unit in accordance with a result of detection of the object when it is simultaneously determined that shifted states of the marine propulsion device are not switchable from one to another and that the object does not exist in the surroundings of the watercraft.

Preferably, the method according to the above yet another aspect further comprises switching the shifted states of the marine propulsion device from a shifted-on state to a neutral state on a regular basis during automatically operating the watercraft.

Preferably, the method according to the above yet another aspect further comprises driving the drive unit until the watercraft is moved away from the object when it is simultaneously determined that the shifted states of the marine propulsion device are not switchable from the shifted-on state to the neutral state and that the object has been detected.

Preferably, in the method according to the above yet another aspect, the watercraft further includes an anchor device, the anchor device (18) including an anchor, and the method further comprises driving the anchor device to lower the anchor after stopping driving the drive unit.

The above described preferred embodiments of the method according to the above yet another aspect can be combined with each other.

A method of automatically operating a watercraft that includes a marine propulsion device including an internal combustion engine according to still yet another aspect includes detecting an opening degree of an electronic throttle valve of the internal combustion engine, regulating the opening degree of the electronic throttle valve of the internal combustion engine in accordance with a control signal, and limiting a velocity of the watercraft when it is determined that the detected opening degree of the electronic throttle valve is greater than the opening degree of the electronic throttle valve to be regulated in accordance with the control signal.

Overall, according to the present invention, it is made possible to provide an automated watercraft operating system and a method, by which, when a marine propulsion device installed in a watercraft is broken down, the breakdown of the marine propulsion device can be appropriately handled in the watercraft.

### BRIEF DESCRIPTION OF THE DRAWINGS

FIG. 1 is a functional block diagram of an automated watercraft operating system according to a present preferred embodiment.
FIG. 2 is a diagram schematically showing navigation routes for a watercraft.
FIG. 3 is a flowchart showing a series of processing to be executed by a watercraft operating controller.
FIG. 4 is a flowchart showing a series of processing to be executed by the watercraft operating controller.

### DETAILED DESCRIPTION OF EMBODIMENTS

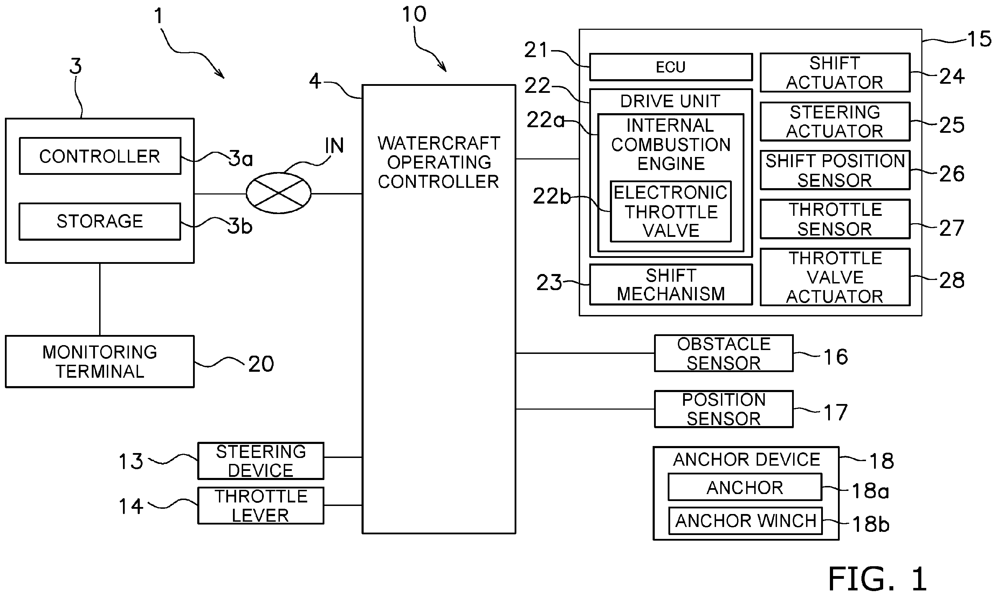

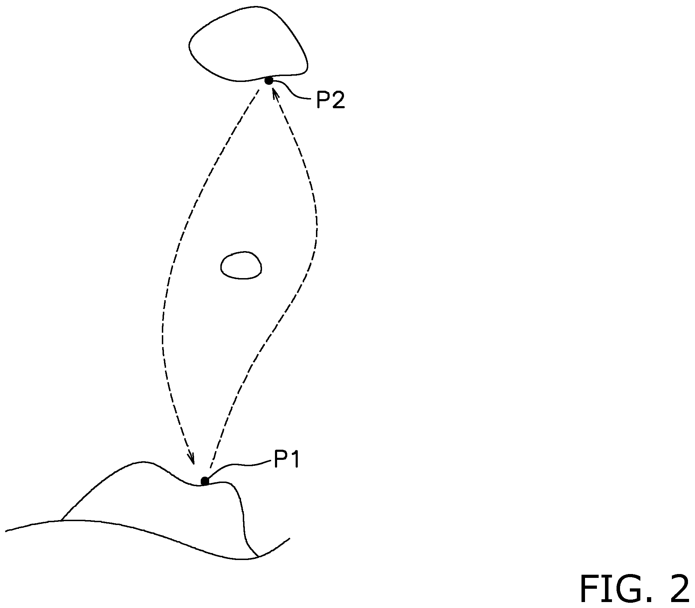

A preferred embodiment will be hereinafter explained with reference to drawings. FIG. 1 is a functional block diagram of an automated watercraft operating system 1. The automated watercraft operating system 1 is a system for automatically operating a watercraft 10. FIG. 2 is a diagram schematically showing navigation routes for the watercraft 10. As shown in FIG. 2, the automated watercraft operating system 1 is used for, e.g., an application for automatically operating the watercraft 10 in a round-trip navigation between a first port P1 and a second port P2 remote from the first port P1.

The watercraft 10 is an unmanned watercraft, for instance, and is used for an application for transporting only supplies such as food and fuel. The distance from the first port P1 to the second port P2 is, for instance, 50 km. The second port P2 is located in, for instance, a remote island.

The automated watercraft operating system 1 includes a server 3 and a watercraft operating controller 4 (exemplary controller). The server 3 is used as, for instance, a computer for managing the watercraft 10. The server 3 is connected to a monitoring terminal 20 for monitoring the watercraft 10 in a communicable manner. The server 3 and the monitoring terminal 20 are connected to be communicable with each other through a network such as the Internet. The server 3 is disposed on the ground. It should be noted that the server 3 may be disposed on the watercraft 10. The monitoring terminal 20 may be a communication terminal such as a smartphone or tablet.

The server 3 includes a controller 3a and a storage 3b. The controller 3a includes a processor such as a CPU (Central Processing Unit) and memories such as a RAM (Random Access Memory) and a ROM (Read Only Memory). The controller 3a is configured to be communicable with the watercraft operating controller 4 through a network such as the Internet.

The storage 3b has stored a variety of information and a variety of programs. The storage 3b includes, for instance, recording media/medium such as an HDD (Hard Disk Drive) and/or an SSD (Solid State Drive). The storage 3b has stored information regarding the positions of the first and second ports P1 and P2, information regarding a nautical chart in the surroundings of the first and second ports P1 and P2, and so forth. The storage 3b has stored at least one route from the first port P1 to the second port P2 and at least one route from the second port P2 to the first port P1. The storage 3b has stored values of the target velocity set for the watercraft 10 depending on the routes. It should be noted that the route from the first port P1 to the second port P2 and that from the second port P2 to the first port P1 may be identical to each other. The storage 3b may be included in the controller 3a or the watercraft operating controller 4.

As shown in FIG. 2, the watercraft 10 includes a steering device 13, a throttle lever 14, a marine propulsion device 15, an obstacle sensor 16 (exemplary obstacle detector), a position sensor 17, and an anchor device 18. Besides, the watercraft 10 includes a variety of devices required for automatically operating the watercraft 10 (not shown in the drawings) such as a velocity sensor, an acceleration sensor, a compass sensor, a sonar, and a camera.

The steering device 13 is a device for operating the direction of turning the watercraft 10. The throttle lever 14 is an operating member for regulating the magnitude of a thrust generated by the marine propulsion device 15 and switching the orientations of the thrust between fore and aft directions. The throttle lever 14 also serves as an operating member for regulating the magnitude of a propulsion force (thrust) for the watercraft 10.

The marine propulsion device 15 includes an ECU (Electronic Control Unit) 21, a drive unit 22, a shift mechanism 23, a shift actuator 24, a steering actuator 25, a shift position sensor 26, a throttle sensor 27, and a throttle valve actuator 28.

The ECU 21 includes a processor such as a CPU and memories such as a RAM and a ROM. The ECU 21 has stored programs and data for controlling the marine propulsion device 15. The ECU 21 controls the drive unit 22. The drive unit 22 generates the propulsion force (thrust) for propelling the watercraft 10. The drive unit 22 includes an internal combustion engine 22a. The drive unit 22 may include an electric motor.

The shift mechanism 23 changes the rotational direction of a mechanical power transmitted from the drive unit 22 to a propeller shaft (not shown in the drawings) between a forward moving side and a rearward moving side in accordance with operating the throttle lever 14.

The shift actuator 24 moves a dog clutch (not shown in the drawings) in accordance with operating the throttle lever 14, whereby shifted states of the shift mechanism 23 (forward moving state, rearward moving state, and neutral state) are switched from one to another. The steering actuator 25 changes the rudder angle of the marine propulsion device 15 in accordance with operating the steering device 13.

The shift position sensor 26 detects the position of the dog clutch in the shift mechanism 23 to detect the shifted state of the shift mechanism 23. The throttle sensor 27 detects the opening degree of an electronic throttle valve 22b of the internal combustion engine 22a and outputs the detected opening degree to the watercraft operating controller 4.

The throttle valve actuator 28 regulates the opening degree of the electronic throttle valve 22b of the internal combustion engine 22a in accordance with a control signal transmitted thereto from the watercraft operating controller 4. The throttle valve actuator 28 regulates the opening degree of the electronic throttle valve 22b of the internal combustion engine 22a in accordance with operating the throttle lever 14.

The obstacle sensor 16 detects an obstacle in the surroundings of the watercraft 10 and outputs information regarding the obstacle to the watercraft operating controller 4. The obstacle sensor 16 is, for instance, a LiDAR (Light Detection and Ranging), a RADAR (Radio Detecting and Ranging), a millimeter wave radar, or so forth.

The position sensor 17 is, for instance, a GPS (Global Positioning System) receiver. The position sensor 17 obtains information regarding the position of the watercraft 10 from a GPS satellite. The position sensor 17 is connected to the watercraft operating controller 4 in a communicable manner. The watercraft operating controller 4 obtains the position of the watercraft 10 from a signal outputted thereto from the position sensor 17.

The anchor device 18 is controlled by the watercraft operating controller 4. The anchor device 18 is a device for anchoring the watercraft 10. The anchor device 18 includes an anchor 18a and an anchor winch 18b. The anchor winch 18b lowers or raises the anchor 18a in accordance with a control signal outputted thereto from the watercraft operating controller 4.

The watercraft operating controller 4 is disposed in the watercraft 10. The watercraft operating controller 4 is programmed to control the watercraft 10. The watercraft operating controller 4 includes a processor such as a CPU and memories such as a RAM and a ROM. The watercraft operating controller 4 has stored programs and data for controlling the marine propulsion device 15. The watercraft operating controller 4 is connected to the steering device 13, the throttle lever 14, and the marine propulsion device 15 by wired or wireless communication. The watercraft operating controller 4 controls the shift actuator 24, the steering actuator 25, and the throttle valve actuator 28 through the ECU 21. The watercraft operating controller 4 controls the steering device 13 and the throttle lever 14 through actuators (not shown in the drawings). It should be noted that the watercraft operating controller 4 may control the shift actuator 24 and the throttle valve actuator 28 without intervention of the steering device 13 and the throttle lever 14.

The watercraft operating controller 4 enables the watercraft 10 to navigate to a destination by automatically operating the watercraft 10. The destination herein refers to the first port P1 or the second port P2. The watercraft operating controller 4 causes the watercraft 10 to automatically move from the first port P1 to the second port P2 or vice versa. For example, the watercraft operating controller 4 obtains watercraft operating information required for automatically operating the watercraft 10 in accordance with operating the monitoring terminal 20 and causes the watercraft 10 to navigate to the destination by automatically operating the watercraft 10. The watercraft operating information includes, for instance, information regarding the navigation route, the target velocity, the nautical chart, weather, and the destination. The watercraft operating controller 4 transmits the following to the server 3: information obtained by a variety of sensors disposed in the watercraft 10 and the image data generated by the camera. The watercraft operating controller 4 is configured to cause the server 3 to display the information, obtained by the server 3 from the watercraft operating controller 4, on, for instance, a display of the monitoring terminal 20.

When determining that shifted states of the marine propulsion device 15 are not switchable from one to another during automatically operating the watercraft 10, the watercraft operating controller 4 stops driving the drive unit 22 in accordance with the result of detection by the obstacle sensor 16.

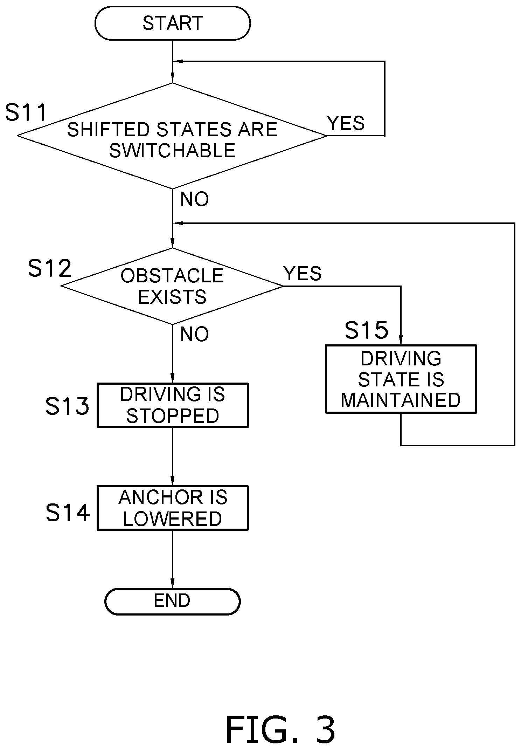

FIG. 3 is a flowchart showing a series of processing to be executed by the watercraft operating controller 4 during automatically operating the watercraft 10. In step S11, the watercraft operating controller 4 determines whether or not the shifted states of the marine propulsion device 15 are switchable from one to another. For example, the watercraft operating controller 4 determines whether or not the shifted state of the shift mechanism 23 has been set in accordance with operating the throttle lever 14 based on the result of detection by the shift position sensor 26.

In step S11, the watercraft operating controller 4 may determine whether or not the shifted states of the marine propulsion device 15 are switchable from one to another by switching the shifted states of the marine propulsion device 15 from a shifted-on state to a neutral state on a regular basis. The shifted-on state of the marine propulsion device corresponds to either the forward moving state or the rearward moving state of the shift mechanism 23. Specifically, the watercraft operating controller 4 may determine whether or not the shifted states of the marine propulsion device 15 are switchable from one to another by switching the shifted states of the shift mechanism 23 from the forward moving state to the neutral state through the throttle lever 14 on a regular basis (e.g., once in a minute).

When the watercraft operating controller 4 determines that the shifted states of the marine propulsion device 15 are not switchable from one to another in step S11, the processing proceeds to step S12. In step S12, the watercraft operating controller 4 determines whether or not an obstacle exists based on the result of detection by the obstacle sensor 16. This is exemplified as follows: When an obstacle is detected by the obstacle sensor 16 and is located at a close distance (within a predetermined range) from the watercraft 10, the watercraft operating controller 4 determines that the obstacle exists; contrarily, when an obstacle is detected by the obstacle sensor 16 but is located at a far distance from the watercraft 10, the watercraft operating controller 4 determines that any obstacles do not exist.

When determining that any obstacles do not exist in step S12, the watercraft operating controller 4 stops driving the drive unit 22 (step S13). In other words, the watercraft operating controller 4 stops driving the drive unit 22 before the watercraft 10 approaches to any obstacles. In step S13, for instance, the watercraft operating controller 4 causes the ECU 21 to stop fuel injection and ignition in the internal combustion engine 22a, whereby the internal combustion engine 22a is stopped being driven.

After stopping driving the drive unit 22, the watercraft operating controller 4 drives the anchor device 18 to lower the anchor 18a (step S14). In other words, in step S14, the watercraft operating controller 4 anchors the watercraft 10 such that the watercraft 10 is moored within a predetermined range. Then, for instance, the watercraft operating controller 4 causes the server 3 to output an abnormal signal to the monitoring terminal 20.

When determining that an obstacle exists in step S12, the watercraft operating controller 4 drives the drive unit 22 until the watercraft 10 is moved away from the obstacle (step S15). Put differently, in step S15, the watercraft operating controller 4 substantially maintains the driving state of the drive unit 22 until determining that any obstacles do not exist. Thereafter, the watercraft operating controller 4 executes the processing of steps S13 and S14.

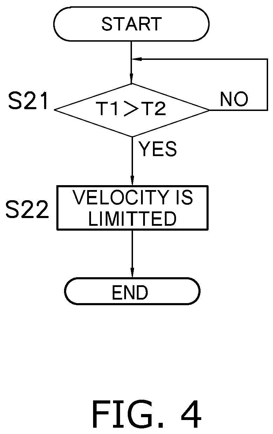

FIG. 4 is a flowchart showing a series of processing to be executed by the watercraft operating controller 4 during automatically operating the watercraft 10. In step S21, the watercraft operating controller 4 determines whether or not an opening degree T1 of the electronic throttle valve 22b detected by the throttle sensor 27 is greater than an opening degree T2 of the electronic throttle valve 22b to be regulated in accordance with a control signal transmitted to the throttle valve actuator 28 from the watercraft operating controller 4. For example, the watercraft operating controller 4 determines whether or not the opening degree T1 of the electronic throttle valve 22b detected by the throttle sensor 27 is greater than an opening degree to be regulated in accordance with the position of the throttle lever 14.

When determining that the opening degree T1 of the electronic throttle valve 22b is greater than the opening degree T2 in step S21, the watercraft operating controller 4 limits the velocity of the watercraft 10 (step S22). For example, the opening degree T1 of the electronic throttle valve 22b becomes greater than the opening degree T2 when the electronic throttle valve 22b becomes uncontrollable due to breakdown of a motor of the throttle valve actuator 28. When the electronic throttle valve 22b becomes uncontrollable, the opening degree T1 of the electronic throttle valve 22b is configured to become a default opening degree, at which the electronic throttle valve 22b is slightly opened from the fully closed position. At the default opening degree, the rotational speed of the internal combustion engine 22a is 1200 rpm, for instance, and is set to be greater than the idling rotational speed thereof.

In step S22, the watercraft operating controller 4 limits the velocity of the watercraft 10 by alternately switching the shifted states of the marine propulsion device 15 between the shifted-on state and the neutral state. In step S22, the watercraft operating controller 4 may limit the velocity of the watercraft 10 by limiting the amount of fuel to be injected into the internal combustion engine 22a. Alternatively, in step S22, the watercraft operating controller 4 may limit the velocity of the watercraft 10 by cutting off ignition in the internal combustion engine 22a. When the ignition in the internal combustion engine 22a is cut off, the velocity of the watercraft 10 may be limited by cutting off ignition in part of the cylinders of the internal combustion engine 22a. When the velocity of the watercraft 10 has been already limited, for instance, the watercraft operating controller 4 may cause the server 3 to output the abnormal signal to the monitoring terminal 20.

In step S21, when limiting the velocity of the watercraft 10, the watercraft operating controller 4 limits the velocity of the watercraft 10 to become a target velocity set in accordance with a target navigation route to be traced by the watercraft 10. In other words, in step S21, the watercraft operating controller 4 limits the velocity of the watercraft 10 not to exceed the target velocity set in accordance with the target navigation route for the watercraft 10.

It should be noted that, even when the watercraft operating controller 4 determines that the opening degree of the electronic throttle valve 22b is less than the opening degree to be regulated in accordance with the control signal in step S21, there is still room for consideration regarding the breakdown of the motor of the throttle valve actuator 28. However, the breakdown of the motor only results in a condition that the velocity of the watercraft 10 becomes less than the target velocity; hence, it is not required for the watercraft operating controller 4 to limit the velocity of the watercraft 10. When determining that the opening degree of the electronic throttle valve 22b is less than the opening degree to be regulated in accordance with the control signal in step S21, for instance, the watercraft operating controller 4 may cause the server 3 to output the abnormal signal to the monitoring terminal 20.

In the automated watercraft operating system 1 described above, when the shift mechanism 23 for switching the shifted states of the marine propulsion device 15 from one to another has gotten stuck, for instance, the drive unit 22 is stopped being driven in accordance with the result of detection by the obstacle sensor 16. Accordingly, when the shift mechanism 23 of the marine propulsion device 15 installed in the watercraft 10 is broken down, the breakdown of the shift mechanism 23 can be appropriately handled in the watercraft 10. Besides, the watercraft operating controller 4 limits the velocity of the watercraft 10 when the opening degree of the electronic throttle valve 22b is not regulatable to the opening degree to be regulated in accordance with the control signal transmitted to the throttle valve actuator 28 from the watercraft operating controller 4. Accordingly, when the motor of the throttle valve actuator 28 is broken down, for instance, the breakdown of the motor can be appropriately handled in the watercraft 10.

One preferred embodiment of the present invention has been explained above. However, the present invention is not limited to the preferred embodiment described above and a variety of changes can be made.

### REFERENCE SIGNS LIST

1: Automated watercraft operating system, 4: Watercraft operating controller, 5: Obstacle sensor, 18: Anchor device, 22: Drive unit, 22a: Internal combustion engine, 22b: Electronic throttle valve, 27: Throttle sensor, 28: Throttle valve actuator

## Claims

1. An automated watercraft operating system for a watercraft (10), the watercraft (10) including a marine propulsion device (15), the marine propulsion device (15) including an internal combustion engine (22a), the automated watercraft operating system comprising:
a controller (4) disposed in the watercraft (10), the controller (4) controlling the marine propulsion device (15);
a throttle sensor (27) detecting an opening degree of an electronic throttle valve (22b) of the internal combustion engine (22a); and
an actuator (28) regulating the opening degree of the electronic throttle valve (22b) of the internal combustion engine (22a) in accordance with a control signal transmitted thereto from the controller (4), wherein
the controller (4) limits a velocity of the watercraft (10) when determining that the opening degree of the electronic throttle valve (22b) detected by the throttle sensor (27) is greater than the opening degree of the electronic throttle valve (22b) to be regulated in accordance with the control signal.

2. The automated watercraft operating system according to claim 1, wherein the controller (4) limits the velocity of the watercraft (10) by alternately switching the marine propulsion device (15) between a shifted-on state and a neutral state of shifted states.

3. The automated watercraft operating system according to claim 1, wherein the controller (4) limits the velocity of the watercraft (10) by limiting an amount of fuel to be injected into the internal combustion engine (22a).

4. The automated watercraft operating system according to claim 1, wherein the controller (4) limits the velocity of the watercraft (10) by cutting off ignition in the internal combustion engine (22a).

5. The automated watercraft operating system according to any one of claims 1 to 4, wherein the controller (4) limits the velocity of the watercraft (10) to be a target velocity set in accordance with a target navigation route to be traced by the watercraft (10) when limiting the velocity of the watercraft (10).

6. A method of automatically operating a watercraft (10), the watercraft including a marine propulsion device (15), the marine propulsion device (15) including an internal combustion engine (22a), the method comprising:
detecting an opening degree of an electronic throttle valve (22b) of the internal combustion engine (22a);
regulating the opening degree of the electronic throttle valve (22b) of the internal combustion engine (22a) in accordance with a control signal; and
limiting a velocity of the watercraft (10) when it is determined that the detected opening degree of the electronic throttle valve (22b) is greater than the opening degree of the electronic throttle valve (22b) to be regulated in accordance with the control signal.

7. The method according to claim 6, further comprising:
limiting the velocity of the watercraft (10) by alternately switching the marine propulsion device (15) between a shifted-on state and a neutral state of shifted states.

8. The method according to claim 6, further comprising:
limiting the velocity of the watercraft (10) by limiting an amount of fuel to be injected into the internal combustion engine (22a).

9. The method according to claim 6, further comprising:
limiting the velocity of the watercraft (10) by cutting off ignition in the internal combustion engine (22a).

10. The method according to any one of claims 6 to 9, further comprising:
limiting the velocity of the watercraft (10) to be a target velocity set in accordance with a target navigation route to be traced by the watercraft (10) in when the velocity of the watercraft (10) is limited.
